# EUROPEAN PATENT APPLICATION

(11) **EP 2 634 074 A1**
(43) Date of publication of application: **04.09.2013**
(21) Application number: 13157289.3
(22) Date of filing: 28.02.2013
(51) Int. Cl.: B62H 1/02, B62H 1/06

(54) **Support arrangement for a two-wheeled vehicle**

(30) Priority: 29.02.2012 SE 1250188
(71) Applicant: Atranvelo AB, 311 50 Falkenberg (SE)
(72) Inventor: Lindén, Krister, 31194 Falkenberg (SE); Pettersson, Roger, 31137 Falkenberg (SE)
(74) Representative: Ström & Gulliksson AB

(57) **Abstract**

A support arrangement for a two-wheeled vehicle has an attachment unit (60) for attaching the support arrangement to a frame portion (50) of the vehicle, and a supporting leg (30) pivotally connected to the attachment unit (60) for movement between an idle position and a ground engaging position, said ground engaging position being established when the vehicle is tilted from an upright position. The supporting leg (30) is biased such that a return movement from the ground engaging position to the idle position is automatically provided when the vehicle is returned to its upright position whereby the weight of the vehicle does not apply a force to the supporting leg (30).

## Description

### Technical field

The present invention relates to a support arrangement for a two-wheeled vehicle, and it also concerns a two-wheeled vehicle - in particular a bicycle.

### Background

It is today known to use a bicycle support when parking a bicycle. Typically, known bicycle supports are moveable between a resting position, in which they don't interfere with the rider of the bicycle, and an operating position in which they engage with the ground for supporting the bicycle.

US-A-3580607 discloses a bicycle support which is to be mounted to the horizontal rear fork member of a bicycle frame and which includes a spring that allows a movement between a resting position and an operating position. The spring acts on the bicycle support when moving between the different end positions and thus ensures that the bicycle support is maintained in either one of the end positions. This support is complex including loose parts, such as the ball which may get stuck in the support or fall out of it if e.g. the spring comes loose.

US-A-531674 describes another type of bicycle support arranged to be locked in its supporting position by the weight of the bicycle and to automatically swing up when the weight is removed. A disadvantage with this old-fashion support is that its movement between a supporting position and a non-supporting position is very quick and uncontrollable which may cause damage to the bicycle, the support and the person maneuvering the support. Another disadvantage is that the support is provided with a torsion spring which is a sensitive component and which has to be kept completely clean from dirt and gravel in order to work. Since the support is designed for a bicycle and the bicycle is kept outdoors dealing with many different weather conditions, this support will have a short life and it will require a lot of maintenance work. It is also difficult to provide the torsion spring with the right tension which leads to either the support pushing the bicycle forward in its supporting position or not retracting enough leaving the support hanging in a non-desired position.

EP-A-2399808 discloses yet another bicycle support which is similar to the one described above and which is also arranged to automatically return to a non-supporting position when the bicycle no longer rests on the support. This support also struggles with the drawbacks of uncontrollable movement between the supporting position and the non-supporting position and it containing sensitive parts.

Although attempts have been performed to facilitate the functionality of bicycle support there is still a need for an improved solution allowing a user to operate the support in a less complex and time consuming manner.

### Summary

It is an object of the present invention to provide an improved support arrangement solves or at least mitigates the above-mentioned problems.

An idea of the present invention is therefore to provide a support arrangement for a two-wheeled vehicle, such as a bicycle, which may be pulled up to its idle position immediately when the bicycle is aligned upright.

Another idea is to provide a support arrangement which is maintained in its operation position by using the weight of the bicycle.

The objects of the invention are achieved by a support arrangement and a vehicle having the features set forth in the appended independent claims; preferred embodiments being defined in the related dependent claims.

According to an aspect of the invention, there is provided a support arrangement for a two-wheeled vehicle, comprising an attachment unit for attaching the support arrangement to a frame portion of the vehicle, and a supporting leg pivotally connected to the attachment unit for movement between an idle position and a ground engaging position, said ground engaging position being established when the vehicle is tilted from an upright position. The supporting leg is biased such that a return movement from the ground engaging position to the idle position is automatically provided when the vehicle is returned to its upright position whereby the weight of the vehicle does not apply a force to the supporting leg.

This support arrangement is advantageous since the user doesn't have to focus on the position of the support arrangement when taking off which increases the safety during take off. Further, the support arrangement is applicable to all types of two-wheeled vehicles and doesn't affect the design and function of the vehicle.

In a preferred embodiment, the supporting leg is biased by means of a spring loaded supporting head having a counter surface following a cam surface. This design results in an efficient and controlled movement of the supporting leg between its end positions without any stops or interruptions. Hence, the user of the vehicle can be sure that the supporting leg has automatically returned to its idle position without risking damaging the vehicle or hurting the user.

In another embodiment the spring loaded supporting head is configured to push the cam surface along an axis. This is preferred since the movement of the supporting head then is controlled to move along a predetermined path which lowers the risks unexpected changes in the operation of the supporting leg which leads to lower risk of wear and tear prolonging the life of the support arrangement.

In yet another embodiment the counter surface of the supporting head is substantially planar which leads to lower manufacturing costs.

Further, in an embodiment the counter surface of the supporting head is continuously movable along the cam surface. This is an advantage since the movement then is not dependant on any other components of the support arrangement. Also, the shapes of the supporting head and the cam surface may be changed, depending on the desired movement of the supporting leg.

In another embodiment the supporting leg or the attachment unit further comprises a hollow part housing the cam surface and the spring loaded supporting head, wherein the hollow part is covered by a cover member. Hereby proper protection of the pivot mechanism of the support arrangement is achieved so that dirt, water and gravel are kept out of the support arrangement prolonging the life of the support arrangement and making sure that dirt and gravel affects the movement of the supporting leg between its ground engaging position and its idle position.

### Brief description of the drawings

Embodiments of the present invention will be described in the following references being made to the appended drawings, wherein:
Fig. 1 shows a support arrangement according to a first embodiment;
Fig. 2 shows a support arrangement according to a second embodiment;
Fig. 3 shows the support arrangement in Fig. 2 in a first state, where parts of the support arrangement are shown in a cross sectional view;
Fig. 4 shows the support arrangement in Fig. 3 in an intermediate state;
Fig. 5 shows the support arrangement in Fig. 3 in a second state; and
Fig. 6 shows a support arrangement according to an alternative embodiment.

### Detailed description of embodiments

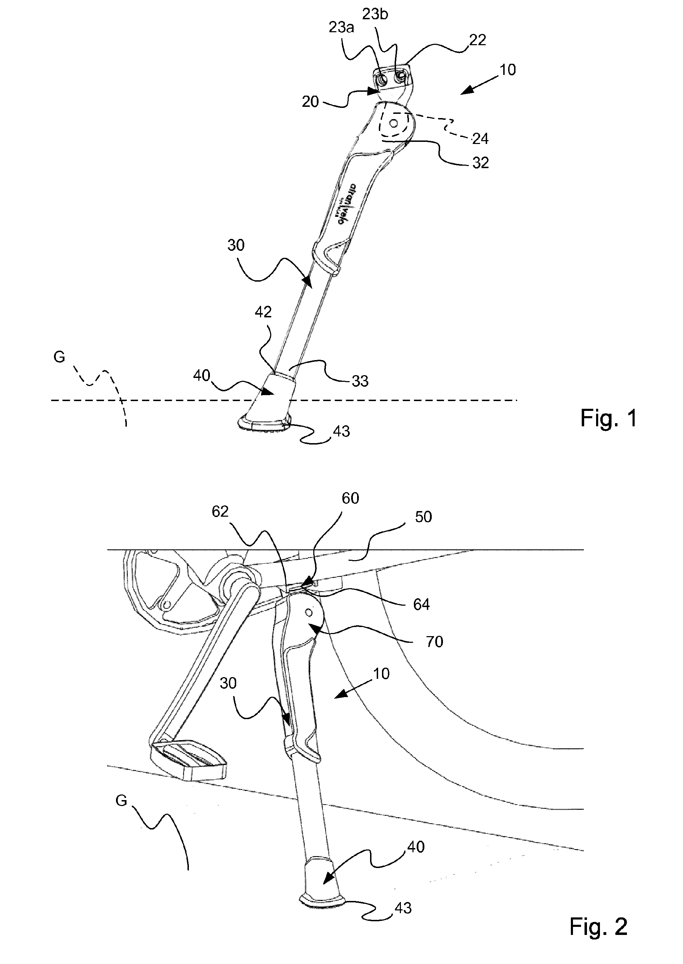

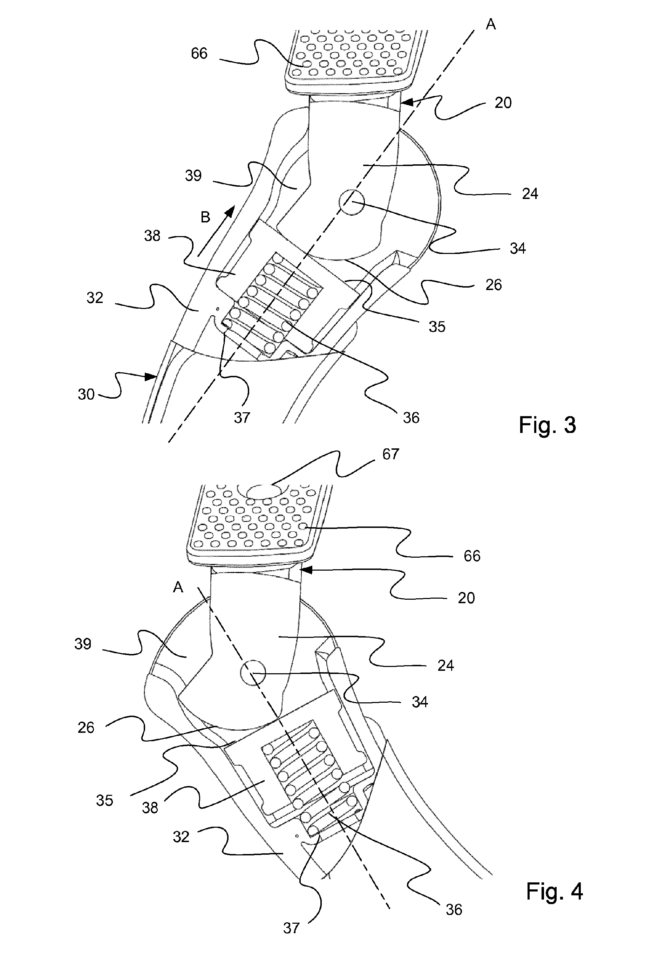

In Fig. 1 a support arrangement 10 according to a first embodiment is shown in its lowered position of operation, i.e. in contact with the ground G. The support arrangement 10 includes an attachment unit 20, an automatically retractable supporting leg 30 and a supporting foot 40. The attachment unit 20 has a first end 22 provided with two threaded openings 23a, 23b which make it possible to attach the support arrangement 10 to a frame portion of a two-wheeled vehicle, e.g. a bicycle or a moped, by means of fasteners such as screws or bolts (not shown). The first end 22 of the attachment unit 20 is free so that the openings 23a, 23b are easy to reach for a person attaching the support arrangement 10 to the frame portion. Optional ways of attaching the support arrangement 10 to the vehicle are of course possible, and another example will be described in Fig. 2. Further, the attachment unit 20 includes a second end 24 which is connected to the supporting leg 30. Figs 3-5 show in more detail the connection between the attachment unit 20 and the supporting leg 30.

The supporting leg 30 has an elongated shape and includes a first portion 32 which in Fig. 1 is the upper portion, and a second portion 33 which is the lower portion in Fig. 1. The upper portion 32 is pivotally connected (at pivot shaft 34) to the attachment unit 20, and the lower portion 33 is provided with a supporting foot 40. The supporting leg 30 may be a solid unit, at least from the lower portion 33 until it reaches the upper portion 32, but it is advantageous for the supporting leg 30 to be produced as a tube. The attachment unit 20 and the supporting leg 30 may preferably be made of aluminum due to its low weight and price. The length of the supporting leg 30 may be adjusted between its upper portion 32 and its lower portion 33 to a preferred length.

The supporting foot 40 is arranged at the lower portion 33 of the supporting leg 30. Preferably, the supporting leg 30 is inserted into an upper sleeve of the supporting foot 40 which may be made of a durable and flexible material, such as rubber or the like. The supporting foot 40 is preferably made as a solid piece but with a sleeve which is located at an upper end 42 of the supporting foot 40 which matches the shape of the second portion 33 of the supporting leg 30 inserted into the supporting foot 40. Opposite the upper end 42 a lower surface 43 of the supporting foot 40 is provided. The surface 43 is preferably uneven with elevations and recesses so that when the supporting leg 30 is lowered and the surface 43 is in contact with the ground G, the support arrangement 10 will be stable and preventing sliding away.

Fig. 2 shows the support arrangement 10 according to a second embodiment in its lowered position, where the lower surface 43 of the supporting foot 40 is in contact with the ground G. The attachment unit 60 of this embodiment is attached to the frame portion 50 of the vehicle by means of a bolt or the like (not shown). This attachment unit 60 includes a first part 62 mounted to frame portion 50 which basically may have a U-shape and a second part 64 attachable to the first part 62. The two legs of the U-shaped part 62 may be angled slightly inwards so that a guiding track is formed, in which guiding track the second part 64 of the attachment unit 60 may be inserted. The second part 64 of the attachment unit 60 may include a plate 66 (the plate 66 is visualized in Figs 3-5), where the size and shape of the plate 66 correspond to the track of the first part 62. The surface of the plate 66 facing the bottom surface of the U-shaped first part 62 is profiled with elevations and recessed and preferably made of a material which creates an increased friction between the two surfaces so that when the plate 66 of the second part 64 is inserted into the first part 62 the support arrangement 10 is secured in the desired position. To secure the fastening of the second part 64 to the first part 62 the second part 64 may preferably further comprise a threaded opening 67, shown in Figs 4-5, which extends through the plate 66 and which corresponds to an opening (not shown) in the first part 62. In the opening a bolt, a screw or another type of fastening means (not shown) is inserted. The opening of the first part 62 is preferably formed as a through hole in the web of the U-shaped part 62.

The supporting leg 30 is connected to the attachment unit 60 at an angle, such that the supporting leg 30 is moveable in a plane which is tilted relative the vertical axis of the vehicle in an upright position. This means that the vehicle must be tilted relative its vertical axis for the supporting leg 30 to reach the ground G. Hence, using the support arrangement 10 will require a step procedure, starting with a movement of the supporting leg 30 to its end position, and a subsequent tilting of the vehicle such that the supporting leg 30 engages with the ground G.

Due to the force on the supporting leg 30 applied by the weight of the vehicle the supporting leg 30 will be prevented from returning to its idle position. However, once the vehicle 50 is returned to its upright position the supporting leg 30 will automatically return to its idle position.

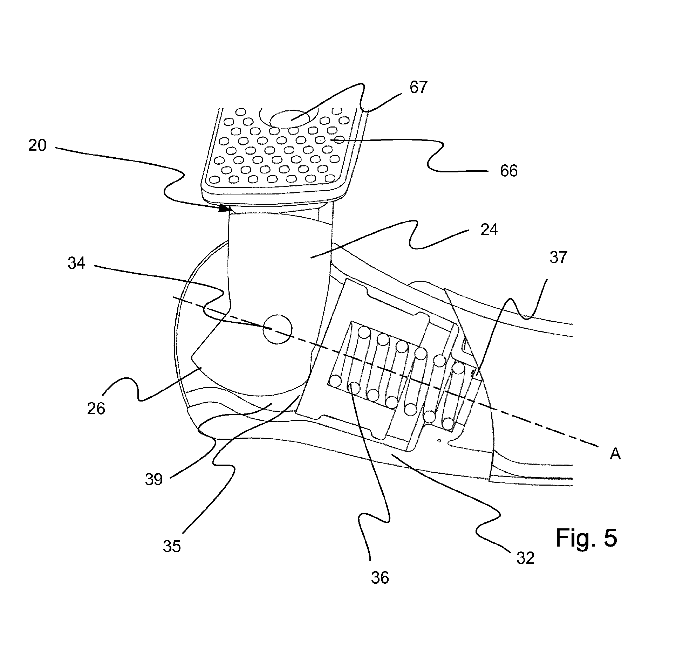

Figs 3-5 show three different states of the connection between the second end 24 of the attachment unit 20 and the supporting leg 30 where outer protective parts of the first portion 32 of the supporting leg 30 are omitted. The first state, when the support arrangement 10 is in its lowered position, i.e. in a supporting position, is shown in Fig. 3 and the second state when the support arrangement 10 is pulled up, i.e. is in a non-supporting position, is shown in Fig. 5. Fig. 4 shows an intermediate state of the support arrangement 10 where it is arranged between the first and the second state.

The upper portion 32 of the supporting leg 30 is partly hollow with a specific profile for receiving the connection between the attachment unit 30 and the supporting leg 30. Preferably close to the top of the upper portion 32, the supporting leg 30 is pivotally connected to the second end 24 of the attachment unit 20 by means of a protrusion 34, such as a bolt or the like. The hollow part 39 of the first portion 32 of the supporting leg 30 further contains a spring 36 and a supporting head 38. The spring 36 is shown as a compression spring, but it could be replaced by a tension spring, a torsion spring, a gas pressure spring or the like.

The shown supporting head 38 is made out of plastic, but could also be made of metal, rubber or any other suitable material or any combination of materials. The supporting head 38 may have a cylindrical shape where the interior dimensions of the cylindrical shape matches the outer dimensions of the spring 36. Hence, the spring 36 is received in the supporting head 38 which has a closed upper end allowing the spring 36 to be compressed along an axis A, when pressing on the supporting head 38, which means that the supporting head 38 is movably arranged along the axis A within the hollow part 39. Further the supporting head 38 includes an outer counter-acting surface 35 on the closed upper end which may be planar. However, the counter surface 35 may also have other shapes for instance a surface with recesses. The shape of the surface may depend on the preferred or aimed-at pull-up speed of the supporting leg 30 when it is moving between its supporting and non-supporting positions.

The spring 36 is attached to a bottom section 37 of the hollow part of the upper portion 32 and operates along the axis A, thus providing a pressing action to the supporting head 38 in the direction of the arrow B. The supporting head 38 is arranged around the spring 36 and has a shape which matches the internal dimensions of the hollow part of the first portion 32. The movement of the supporting head 38, along the axis A, makes the counter surface 35 act and press on a cam surface 26 of the second end 24 of the attachment unit 20. The cam surface 26 has the shape of a constant curve and is in permanent contact with the counter surface 35 allowing the supporting leg 30 to rotate around the pivot connection 34 without interruptions, between its first and second state. The spring 36 is in its initial state when the supporting arrangement 10 is in its second state, i.e. when the supporting leg 30 is pulled up into its non-supporting position. This is the state where the vehicle is standing straight up and ready to go.

When the user wishes to park the vehicle, he/she lowers the supporting leg 30 into its second state, which means that the supporting leg 30 rotates preferably more than 90° around its pivot connection 34 into its supporting position. When the supporting leg 30 is lowered, the user tilts the vehicle until the supporting foot 40 is in contact with the ground G. The weight of the vehicle will generate a force along the axis A pressing down the spring 36 so that the support arrangement 10 stays in position, i.e. the total weight of the vehicle generates a bigger force than what the spring 36 generates along the axis A so that the supporting leg 30 stays in contact with the ground G in its ground engaging position. The spring 36 is then kept in a tensed state by means of the supporting head 38 acting as a counter force. The cam surface 26 is then ready to push back the supporting leg 30 as soon as the weight of the vehicle is removed from the support arrangement 10. As soon as the user lifts up the vehicle again and the force of the weight is removed from the spring 36, the spring 36 presses on the supporting head 38 which then presses on the cam surface 26 along the axis A, starting the rotation of the supporting leg 30 about the pivot connection 34. The rotation urges the counter surface 35 to follow or glide on the cam surface 26 which by means of its shape, the constant curve, automatically returns the supporting leg 30 back to its non-supporting position, i.e. the initial state of the spring 36, shown in Fig. 5, in a controlled way without any quick movements, stops or interruptions. The shape of the cam surface and its position i relation to the pivot connection 34 together with the generated force along axis A generates the preferred automatic movement of the supporting leg 30 from the ground engaging position to the idle position when the vehicle reverts from the tilted position to the upright position.

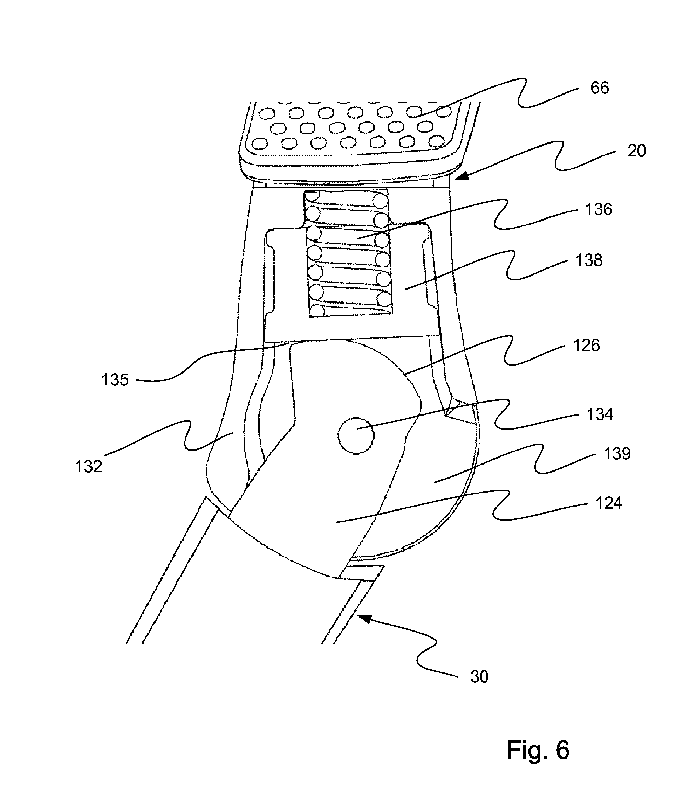

Fig. 6 shows another type of a connection between the attachment unit 20 and the supporting leg 30 according to an alternative embodiment. Here a second end 124, which corresponds to the second end 24 shown in Figs 3-5, is attached to the supporting leg 30. The second end 124 is pivotally connected (at 134) to the attachment unit 20 and includes a cam surface 126 which corresponds to the cam surface 26 also shown in Figs 3-5. Further, a first portion 132 is attached to the attachment unit 20 and where the first portion 132 is provided with a hollow part 139. The hollow part 139 houses a spring 136 and a supporting head 138 and where the spring 136 is pressing on the supporting head 138. The first portion 132, the hollow part 139, the spring 136 and the supporting head 138 and the connections between the parts all correspond to the first portion 32, the hollow part 39, the spring 36, the supporting head 38 and the connections shown in Figs 3-5.

The feature that the support arrangement 10 automatically pulls up into a position where the vehicle is ready to be used is advantageous since the user then doesn't have to focus on the position of the support arrangement 10 when taking off which increases the safety during take off. Further, the simplicity of the support arrangement 10 when the arrangement doesn't stop in different positions, decreases cost for manufacturing. Another advantageous feature of the support arrangement 10 and its functions is that it doesn't affect the design of the vehicle and also the connection between the attachment unit 20 and the supporting leg 30 doesn't affect the design of the support arrangement 10.

In some countries, e.g. Germany, there are regulations stipulating that the support leg of a two-wheeled vehicle automatically has to be pulled up when getting ready for take off. The improved support arrangement fulfills these requirements which increase safety.

The connection between the attachment unit 20 and the supporting leg 30 is accommodated in a space protected for external environment and forces as shown in Figs 1-2. The upper section of the supporting leg 30 is configured as a cover member 70 shown in Fig. 2. This is advantageous since it prolongs the time between installation and reparation. A vehicle is usually used outdoor where the climate can change drastically, wind, rain, snow, etc. may harm the vehicle and its parts. The above described support arrangement 10 has therefor its vital parts protected.

It should be appreciated that the invention is by no means limited to the embodiments described herein, and many modifications are feasible within the spirit of the invention set forth in the appended claims. In particular, it should be mentioned that the support arrangement is applicable to many different kinds of two-wheeled vehicles, such as electric bikes, mopeds, motorcycles and bicycles.

## Claims

1. A support arrangement for a two-wheeled vehicle, comprising an attachment unit (20) for attaching the support arrangement to a frame portion (50) of the vehicle, and a supporting leg (30) pivotally connected to the attachment unit (20) for movement between an idle position and a ground engaging position, said ground engaging position being established when the vehicle is tilted from an upright position, wherein said supporting leg (30) is biased such that a return movement from the ground engaging position to the idle position is automatically provided when the vehicle is returned to its upright position whereby the weight of the vehicle does not apply a force to the supporting leg (30).

2. The support arrangement according to claim 1, wherein the supporting leg (30) is biased by means of a spring loaded supporting head (38; 138) having a counter surface (35; 135) following a cam surface (26; 126).

3. The support arrangement according to claim 2, wherein the spring loaded supporting head (38; 138) is configured to push on the cam surface (26) along an axis (A).

4. The support arrangement according to claim 2 or 3, wherein the spring loaded supporting head (38) is accommodated in the supporting leg (30), and the cam surface (26) is provided on the attachment unit (20) and arranged within the supporting leg (38; 138).

5. The support arrangement according to claim 2 or 3, wherein the spring loaded supporting head (138) is accommodated in the attachment unit (20) and the cam surface (126) is provided on the supporting leg (30).

6. The support arrangement according to any one of claim 2 - 5, wherein the counter surface (35; 135) of the supporting head (38; 138) is substantially planar.

7. The support arrangement according to any one of the claims 2 - 6,
wherein the counter surface (35; 135) of the supporting head (38; 138) is continuously movable along the cam surface (26; 126).

8. The support arrangement according to any one of the claims 2 - 7,
wherein the supporting head (38; 138) is movable along the longitudinal axis (A) of a spring (36; 136).

9. The support arrangement according to any one of the claims 2-8 , wherein the supporting leg (30) or the attachment unit (20) further comprises a hollow part (39; 139) housing the cam surface (26; 126) and the spring loaded supporting head (38; 138).

10. The support arrangement according to claim 9, wherein the hollow part (39) is covered by a cover member (70).

11. A two-wheeled vehicle, in particular a bicycle or an electric bike, comprising a supporting arrangement as claimed in any one of the preceding claims.

12. Use of a support arrangement as claimed in any one of claims 1-10, for supporting a tilted two-wheeled vehicle and for achievement of safe take off of the vehicle from an upright position.
